(19) **Europäisches Patentamt European Patent Office Office européen des brevets**

(11) **EP 3 835 837 B1**

(12) **EUROPEAN PATENT SPECIFICATION**

(45) Date of publication and mention
of the grant of the patent:
**27.09.2023 Bulletin 2023/39**

(51) International Patent Classification (IPC):
**G02B 6/024** (2006.01)    **G02B 6/028** (2006.01)

(21) Application number: **19932454.2**

(52) Cooperative Patent Classification (CPC):
**G02B 6/024;** G02B 6/028; G02B 6/0283;
G02B 6/0286

(22) Date of filing: **12.12.2019**

(86) International application number:
**PCT/CN2019/124883**

(87) International publication number:
**WO 2020/248549 (17.12.2020 Gazette 2020/51)**

(54) **PANDA POLARIZATION MAINTAINING OPTICAL FIBER**

PANDA-POLARISATIONSERHALTENDE OPTISCHE FASER

FIBRE OPTIQUE À MAINTIEN DE POLARISATION PANDA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2019 CN 201910507961**

(43) Date of publication of application:
**16.06.2021 Bulletin 2021/24**

(73) Proprietors:
• **Fiberhome Telecommunication Technologies
Co., Ltd**
**Wuhan, Hubei 430000 (CN)**
• **Ruiguang Telecommunication Technologies Co.,
Ltd.**
**Wuhan, Hubei 430074 (CN)**

(72) Inventors:
• **LUO, Wenyong**
**Wuhan, Hubei 430000 (CN)**
• **CHEN, Baoping**
**Wuhan, Hubei 430000 (CN)**
• **KE, Yili**
**Wuhan, Hubei 430000 (CN)**

• **DU, Cheng**
**Wuhan, Hubei 430000 (CN)**
• **ZHANG, Tao**
**Wuhan, Hubei 430000 (CN)**
• **LI, Wei**
**Wuhan, Hubei 430000 (CN)**
• **SHAO, Shuai**
**Wuhan, Hubei 430000 (CN)**
• **ZHU, Qiao**
**Wuhan, Hubei 430000 (CN)**
• **ZENG, Fanqiu**
**Wuhan, Hubei 430000 (CN)**

(74) Representative: **Lohmanns, Bernard**
**Benrather Schlossallee 49-53**
**40597 Düsseldorf (DE)**

(56) References cited:
| | |
|---|---|
| CN-A- 103 018 821 | CN-A- 103 154 790 |
| CN-A- 104 536 085 | CN-A- 105 278 032 |
| CN-A- 106 291 807 | CN-A- 108 845 389 |
| CN-A- 110 346 866 | JP-A- H0 930 823 |
| JP-A- 2003 156 647 | JP-A- 2016 051 804 |
| US-A1- 2002 033 998 | US-A1- 2013 071 082 |
| US-A1- 2013 308 914 | US-A1- 2017 139 129 |

**Description**

**Field of the Invention**

The present invention relates to the technical field of polarization maintaining optical fibers, in particular to a panda polarization maintaining optical fiber.

**Background of the Invention**

Inertial technology is a completely autonomous key technology used to achieve carrier attitude and trajectory control. Compared with other types of gyroscopes, the optical fiber gyroscope has many advantages such as short startup time, simple structure, light weight, no moving parts, and strong environmental adaptability, and it overcomes the locking phenomenon of ring laser gyroscopes and eliminates the need for anti-mechanical shake measures to maintain the sensitivity at low speeds. The optical fiber gyroscope has become one of the main directions of rapid development in the field of inertial navigation technology and has been widely used in many fields such as aircraft, automobile and ship navigation systems and motion detection.

The optical fiber ring made of the polarization maintaining optical fiber is the core sensitive unit in the optical fiber gyroscope, and the performance thereof determines the performance of the optical fiber gyroscope. A polarization maintaining optical fiber (PMF), a special fiber that maintains the linear polarization state while realizing the single-mode transmission characteristics of optical, has application value in many polarization-related application fields (such as multi-dimensional multiplexing coherent communication, optical fiber gyroscope technology, current mutual induction technology, optical fiber hydrophone and polarization sensing, etc.).

With the development of the optical fiber gyroscopes in the direction of miniaturization, compared to the previously applicable 1310nm and 1550nm, wavelengths such as 850nm are used to reduce the volume of coil while maintaining accuracy, good attenuation and excellent extinction ratio. However, the existing polarization maintaining optical fiber has no support for this type of fine-diameter polarization maintaining optical fiber product, so relevant technology development is required.

For example, US 2017/139129 A1 discloses a small-diameter polarization maintaining optical fiber with a quartz optical fiber, an inner coating and an outer coating, a quartz cladding and two stress zones. CN 105 278 032 A and US 2013/0308914 A1 disclose other panda polarization maintaining fibers with stress zones. US 2013/0071082 A1 discloses a multi-clad polarization-maintaining optical fiber comprising a core, pedestal surroundings, claddings and at least one stress member. US 2002/033998 A1 discloses a silica-based amplification optical fiber for amplifying signals upon receiving pumping light, comprising: a light propagation region through which the signals propagate and which is at least partially doped with erbium and aluminum of 4 wt % or more; and a polarization maintaining structure for maintaining a polarized state of the signals. CN 103 018 821 A discloses a polarization maintaining optical fiber with small bending radius and manufacture method of polarization maintaining optical fiber.

**Summary of the Invention**

In view of the defects existing in the prior art, the purpose of the present invention is to provide a panda polarization maintaining optical fiber that can meet the wavelengths of 850 nm, 1310 nm and 1550 nm, with good attenuation and excellent extinction ratio.

In order to achieve the above purpose the invention provides a panda polarization maintaining optical fiber according to independent claim 1. Further embodiments are defined in the dependent claims.

Compared to the prior art, the present invention has the following advantages.

The present invention designs a new waveguide structure of polarization maintaining optical fiber. The germanium-doped core layer of the polarization maintaining optical fiber forms a step-type waveguide structure with a parabolic rise, the relative refractive index difference of which is relatively high and can have a smaller cut-off wavelength, so that the polarization maintaining optical fiber can meet the winding requirements of optical fiber gyroscopes with 850nm, 1310nm and 1550nm.

The present invention is designed with a depressed fluorine-doped core layer around the germanium-doped core layer, which can solve the problem of large attenuation caused by an excessive proportion of the stress zones in the entire quartz area when the diameter of the quartz cladding layer decreases.

When the working wavelength is 850nm, the attenuation of the polarization maintaining optical fiber is less than 2.2dB/km, and the extinction ratio is higher than 20dB/km; when the working wavelength is 1310nm, the attenuation of the polarization maintaining optical fiber is less than 0.4dB/km, and the extinction ratio is higher than 28dB/km; when the working wavelength is 1550nm, the attenuation of the polarization maintaining optical fiber is less than 0.3dB/km, and the extinction ratio is higher than 25dB/km; the present invention not only has good attenuation and excellent extinction ratio, but also the full temperature attenuation change per kilometer of the polarization maintaining optical fiber is less than 0.2dB and the full temperature extinction ratio change is less than 3dB at a temperature of -55°C ~ 90°C.

**Description of the Drawings**

Fig. 1 is a schematic diagram of an end face structure of a panda polarization maintaining optical fiber according to the claimed invention;

Fig. 2 is a schematic diagram of an end surface structure of a core layer of a panda polarization maintaining optical according to the claimed invention;

Fig, 3 is a schematic diagram of a waveguide structure of a panda polarization maintaining optical according to the claimed invention;

Fig. 4 is a schematic diagram of an end surface structure of a panda polarization maintaining optical fiber coated with a coating layer according to the claimed invention.

In the figures: 1-core layer, 10-germanium-doped core layer, 100-flat germanium-doped layer, 101-gradient germanium-doped layer, 11-fluorine-doped core layer, 110-quartz core layer, 111-the first gradient fluorine-doped layer, 112-flat fluorine-doped layer, 113-the second gradient fluorine-doped layer, 2-quartz cladding layer, 3-stress zone, 4-transition annular region, 5-inner coating layer, 6-outer coating layer.

**Detailed Description of the Embodiments**

The present invention will be further described below in detail with reference to the drawings in combination with the embodiments.

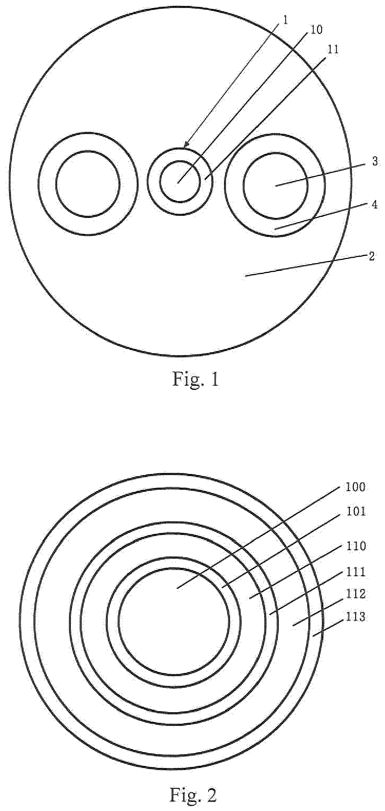

As shown in Fig. 1, the embodiment of the present invention provides a panda polarization maintaining optical fiber, along the radial direction of the optical fiber, the polarization maintaining optical fiber comprises a core layer 1 and a quartz cladding layer 2 successively arranged from the inside to the outside, and the quartz cladding layer 2 is made of pure quartz.

As shown in Fig. 1, for the panda polarization maintaining optical fiber, the embodiment further provides with two circular stress zones 3 in the quartz cladding layer 2, wherein the two stress zones 3 are centered symmetrically along the core layer 1, and a transition annular region 4 concentric with the stress zone 3 is arranged on the outside of each stress zone 3, so the transition annular regions 4 of the two stress zones 3 are also centered symmetrically along the core layer 1; an interval is existed between the transition annular regions 4 and the core layer 1, and the centers of the core layer 1, the stress zones 3, and the transition annular regions 4 are on the same straight line.

As shown in Fig. 1, the core layer 1 comprises a germanium-doped core layer 10 and a fluorine-doped core layer 11 successively arranged from the inside to the outside. More specifically, as shown in Fig. 2, the germanium-doped core layer 10 comprises a flat germanium-doped layer 100 and a gradient germanium-doped layer 101 successively arranged from the inside to the outside, the refractive index profile of the gradient germanium-doped layer 101 is in a parabolic shape, and the refractive index of the gradient germanium-doped layer 101 gradually decreases in a direction away from the flat germanium-doped layer 100, the gradient germanium-doped layer 101 adopts a method of gradually reducing the germanium doping in a direction away from the flat germanium-doped layer 100, so that the refractive index profile of the gradient germanium-doped layer 101 is in a parabolic shape, which can improve the matching relationship between the germanium-doped core layer 10 and the fluorine-doped core layer 11, thereby reducing attenuation.

Since germanium can increase the refractive index, the germanium-doped core layer 10 can be formed as a step-type waveguide structure with a parabolic rise through doping germanium, which has a higher relative refractive index difference and can have a smaller cut-off wavelength, specifically less than $30nrn, so that the polarization maintaining optical fiber can meet the winding of optical fiber gyroscopes with the wavelengths of 850nm, 1310nm and 1550nm.

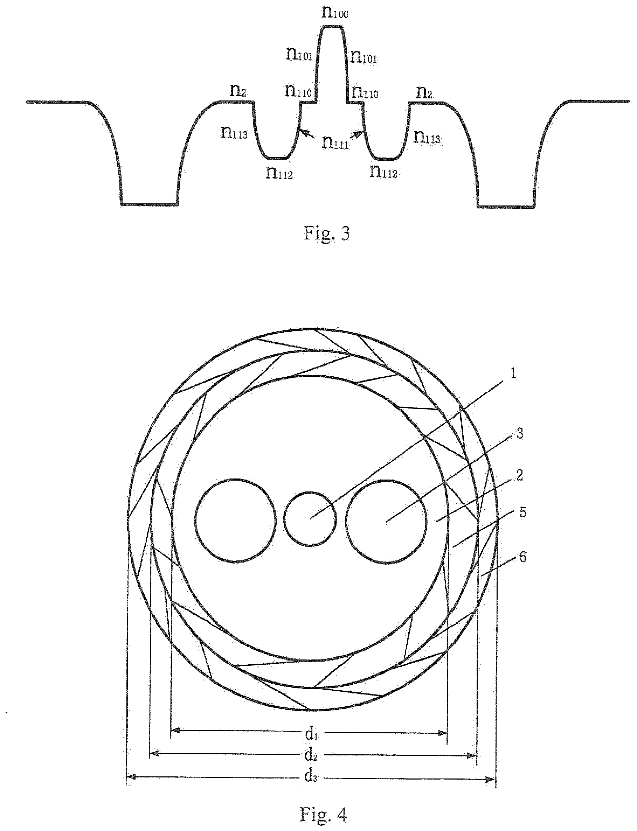

At the same time, in accordance with the requirements of the fine-diameter polarization maintaining optical fiber, in order to solve the problem of large attenuation that may be caused by the excessive proportion of the stress zones 3 occupying the entire quartz zone when the diameter of the quartz cladding layer 2 of the polarization maintaining optical fiber decreases, the depressed fluorine-doped core layer 11 is designed around the germanium-doped core layer 10. As shown in Fig. 2, the fluorine-doped core layer 11 comprises a quartz core layer 110, a first gradient fluorine-doped layer 111, a flat fluorine-doped layer 112 and a second gradient fluorine-doped layer 113 successively arranged from the inside to the outside. The refractive index profiles of the first gradient fluorine-doped layer 111 and the second gradient fluorine-doped layer 113 are both in the shape of a curve, and are symmetric to each other along the refractive index profile of the flat fluorine-doped layer 112. The refractive index of the first gradient fluorine-doped layer 111 gradually decreases toward the direction away from the quartz core layer 110. As shown in Fig. 3, the refractive index profiles of the first gradient fluorine-doped layer 111 and the second gradient fluorine-doped layer 113 have a parabolic shape. Through such a design, on the one hand, the optical signal is better constrained in the fiber core, and on the other hand, the squeezing effect of the stress zone 3 on the germanium-doped core layer 10 is relieved. Therefore, on the one hand, the stress birefringence caused by the stress zone 3 on the germanium-doped core layer 10 is maintained, so that the optical mode field transmitted therein becomes elliptical and achieves polarization, and on the other hand, the undesirable squeezing of the stress zone 3 on the germanium-doped core layer 10 is relieved, thereby optimizing the attenuation performance of the optical fiber.

In this embodiment, when the working wavelength is 850nm, the attenuation of the polarization maintaining optical fiber is less than 2.2dB/km, and the extinction ratio is higher than 20dB/km. When the working wavelength is 1310nm, the attenuation of the polarization maintaining optical fiber is less than 0.4dB/km and the extinction ratio is higher than 28dB/km. When the working wavelength is 1550nm, the attenuation of the polarization maintaining optical fiber is less than 0.3dB/km, and the extinction ratio is higher than 25dB/km. The stress zone 3 is combined with the ring-shaped gradient fluorine-doped layer so as to optimize the stress transfer effect, achieve better stress birefringence on the germanium-doped core layer 10, and achieve an excellent extinction ratio. On the other hand, the design of the multi-layer germanium-doped core layer is combined with that of the ring-shaped gradient fluorine-doped, which optimizes the interface stress and can achieve excellent attenuation. In addition, the ring-shaped gradient fluorine-doped design can better constrain the optical signal transmission in the fiber core, so as to make the optical signal have less dissipation when the optical fiber is bent, so that it not only has good attenuation and excellent extinction ratio, but also at a temperature of -55°C~90°C, the full temperature attenuation change per kilometer of the polarization maintaining optical fiber at 1550 nm is less than 0.2dB, and the full temperature extinction ratio change is less than 3dB.

As shown in Fig. 3, which is a waveguide structure diagram of the polarization maintaining optical fiber, the embodiment provided by the present invention uses the following formula to calculate the relative refractive index difference $\Delta$:

$$\Delta = (n_{\text{refractive index}} - n_2)/(n_{\text{refractive index}} + n_2) \times 100\%$$

wherein the refractive index of the quartz cladding layer 2 is $n_2$, when calculating the relative refractive index difference $\Delta n_{100}$ between the flat germanium-doped layer 100 and the quartz cladding layer 2, $n_{\text{refractive index}}$ in the above formula is the refractive index $n_{100}$ of the flat germanium-doped layer 100; when calculating the relative refractive index difference $\Delta n_{101}$ between the gradient germanium-doped layer 101 and the quartz cladding layer 2, $n_{\text{refractive index}}$ in the above formula is the refractive index $n_{101}$ of the gradient germanium-doped layer 101; when calculating the relative refractive index difference $\Delta n_{112}$ between the flat fluorine-doped layer 112 and the quartz cladding layer 2, $n_{\text{refractive index}}$ in the above formula is the refractive index $n_{112}$ of the flat fluorine-doped layer 112; and when calculating the relative refractive index difference $\Delta n_{111}$ between the first gradient fluorine-doped layer 111 and the quartz cladding layer 2, $n_{\text{refractive index}}$ in the above formula is the refractive index $n_{111}$ of the first gradient fluorine-doped layer 111.

The refractive index $n_{110}$ of the quartz core layer 110 is the same as the refractive index $n_2$ of the quartz cladding layer 2.

The relative refractive index difference $\Delta n_{100}$ between the refractive index $n_{100}$ of the flat germanium-doped layer 100 and $n_2$ ranges from 0.6% to 1.4%.

The relative refractive index difference $\Delta n_{101}$ between the refractive index $n_{101}$ of the gradient germanium-doped layer 101 and $n_2$ is calculated by $\Delta n_{101} = \Delta n_{100} \times (1 - a_{101} x^2_{101})$, wherein $\Delta n_{100}$ is the relative refractive index difference between $n_{100}$ and $n_2$, $x_{101}$ is the distance from any point in the gradient germanium-doped layer 101 to the edge of the flat germanium-doped layer 100, $x_{101} \geq 0$ and the maximum value thereof is the thickness of the gradient germanium-doped layer 101, $a_{101}$ is the gradient coefficient of the gradient germanium-doped layer 101, and the range of $a_{101}$ is $3 \leq a_{101} \leq 10$.

The relative refractive index difference $\Delta n_{112}$ between the refractive index $n_{112}$ of the flat fluorine-doped layer 112 and $n_2$ ranges from -0.1% to -0.5%.

The refractive index of the first gradient fluorine-doped layer 111 is the relative refractive index difference $\Delta n_{111}$ between $n_{111}$ and $n_2$, which is calculated by $\Delta n_{111} = \Delta n_{112} \times (1 - a_{111} x^3_{111})$, wherein $\Delta n_{112}$ is the relative refractive index difference between $n_{112}$ and $n_2$, $x_{111}$ is the distance from any point in the first gradient fluorine-doped layer 111 to the inner edge of the flat fluorine-doped layer 112, $x_{111} \geq 0$ and the maximum value thereof is the thickness of the first gradient fluorine-doped layer 111, $a_{111}$ is the gradient coefficient of the first gradient fluorine-doped layer 111, and the range of $a_{111}$ is $10 \leq a_{111} \leq 30$; since the refractive index $n_{113}$ of the second gradient fluorine-doped layer 113 and the refractive index $n_{111}$ of the first gradient fluorine-doped layer 111 are symmetrical along the refractive index $n_{112}$ of the flat fluorine-doped layer 112, the details are not repeated here.

Further, the stress zone 3 is a high stress zone, and the boron content thereof is 60 ppm~1200 ppm.

In order to better optimize the stress conduction effect and achieve better stress birefringence effect through doping less boron to achieve small stress, the transition annular zone 4 is arranged, which presents a parabolic shape, so as to better optimize the stress birefringence, so that a higher stress birefringence can be obtained under the condition of a smaller stress, so as to achieve an excellent extinction ratio in the polarization maintaining optical fiber, and avoid the reduction of the optical fiber life due to excessive stress in the stress zone 3 in the optical fiber at the same time. The boron content Y of the transition annular region 4 is calculated by $Y=a_4(x_4+x_4^2)$, wherein $x_4$ is the distance from any point in the transition annular region 4 to the outer edge of the transition annular region 4, $x_4 \geq 0$ and the maximum value thereof is the thickness of the transition annular region 4, $a_4$ is the gradient coefficient of the transition annular region 4, and has the value of $2 \leq a_4 \leq 40$. As shown in Fig. 3, the transitional annular region 4 is in a parabolic shape, and the stress zone 3 is in a flat horizontal line shape.

As shown in Fig. 4, an inner coating layer 5 and an outer coating layer 6 are successively arranged outside the quartz cladding layer 2 from the inside to the outside, and the Young's modulus of the inner coating layer 5 is smaller than that of the outer coating layer 6, wherein the inner coating layer 5 is directly in contact with the quartz cladding layer 2 and is relatively soft; the outer coating layer 6 is the outermost protective shell of the optical fiber and is relatively hard. In this way, through providing two layers of coatings layers with different Young's moduli, the harder outer coating layer 6 forms a protective shell, and the softer inner coating layer 5 buffers the stress impact, so that the optical fiber has good multi-environment application performance. In the embodiment, the Young's modulus of the inner coating layer 5 is 0.5Mpa~2.5Mpa, and the Young's modulus of the outer coating layer 6 is 550Gpa~1550Gpa.

As shown in Fig. 4, the diameter of the quartz cladding layer 2 is $d_1$, and the diameters of the inner coating layer 5 and the outer coating layer 6 are $d_2$ and $d_3$, respectively;

when the center diameter of the quartz cladding layer 2 is $40\mu m$, the range of $d_1$ is $39.0\mu m \leq d_1 \leq 41.0\mu m$, $52.0\mu m \leq d_2 \leq 65.0\mu m$, and $78.0\mu m \leq d_3 \leq 83.0\mu m$;

when the center diameter of the quartz cladding layer 2 is $60\mu m$, the range of $d_1$ is $59.0\mu m \leq d_1 \leq 61.0\mu m$, $72.0\mu m \leq d_2 \leq 85.0\mu m$, and $98.0\mu m \leq d_3 \leq 105.0\mu m$;

when the center diameter of the quartz cladding layer 2 is $80\mu m$, the range of $d_1$ is $79.0\mu m \leq d_1 \leq 81.0\mu m$, $100.0\mu m \leq d_2 \leq 115.0\mu m$, and $134.0\mu m \leq d_3 \leq 140.0\mu m$, or $115.0\mu m \leq d_2 \leq 135.0\mu m$, and $164.0\mu m \leq d_3 \leq 170.0\mu m$;

when the center diameter of the quartz cladding layer 2 is $125\mu m$, the range of $d_1$ is $124.0\mu m \leq d_1 \leq 126.0\mu m$, $170.0\mu m \leq d_2 \leq 205.0\mu m$, and $235.0\mu m \leq d_3 \leq 250.0\mu m$

It can be seen from the above that the diameter of the quartz cladding layer 2 of the optical fiber covers 40 $\mu m$~125 $\mu m$, and the diameter of the coating layer covers 80 $\mu m$~250 $\mu m$, which can fully meet the development needs of high precision and miniaturization of optical fiber gyroscopes.

The present invention will be further described below in detail in combination with embodiments and drawings.

When the center diameter of the quartz cladding layer 2 is 40 $\mu m$, four types of optical fibers are implemented. The specific parameters are shown in Table 1.

Table 1 Quartz Cladding Layer with Center Diameter of $40\mu m$

|  | Optical Fiber 1 | Optical Fiber 2 | Optical Fiber 3 | Optical Fiber 4 |
|---|---|---|---|---|
| Diameter of Quartz Cladding Layer 2 ($\mu m$) | 39 | 40 | 40.5 | 41 |
| Diameter of Core Layer 1 ($\mu m$) | 3.5 | 5 | 5.1 | 5.5 |
| Diameter of Inner Coating Layer 5 ($\mu m$) | 52 | 55.1 | 60.2 | 65 |
| Diameter of Outer Coating Layer 6 ($\mu m$) | 78 | 80.3 | 81.5 | 83 |
| $\Delta n_{100}$ | 0.60% | 1.00% | 1.20% | 1.40% |
| $a_{101}$ | 3 | 5 | 7 | 10 |
| Thickness of Gradient Germanium-Doped Layer 101 ($\mu m$) | 0.2 | 0.2 | 0.3 | 0.4 |

(continued)

| | Optical Fiber 1 | Optical Fiber 2 | Optical Fiber 3 | Optical Fiber 4 |
|---|---|---|---|---|
| $\Delta n_{112}$ | -0.10% | -0.20% | -0.35% | -0.50% |
| $a_{111}$ | 10 | 15 | 22 | 30 |
| Thickness of First Gradient Fluorine-Doped Layer 111 ($\mu$m) | 0.2 | 0.3 | 0.2 | 0.3 |
| Boron Content in Stress Zone 3 (ppm) | 60 | 800 | 1000 | 1200 |
| a4 | 2 | 10 | 30 | 40 |
| Thickness of Transition Annular Region 4 ($\mu$m) | 1 | 2 | 1 | 2 |
| Young's Modulus of Inner Coating Layer 5 (Mpa) | 0.5 | 0.8 | 1.2 | 2.5 |
| Young's Modulus of Outer Coating Layer 6 (Gpa) | 550 | 690 | 780 | 1150 |
| Working Wavelength (nm) | 850 | 1310 | 1310 | 1550 |
| Attenuation (dB/km) | 2.1 | 0.45 | 0.34 | 0.32 |
| Extinction Ratio (dB/km) | 22 | 28 | 29 | 26 |
| Attenuation Change Per Kilometer at Full Temperature Change of -55°C~90°C (dB) | 0.05 | 0.08 | 0.1 | 0.1 |
| Extinction Ratio Change Per Kilometer at Full Temperature Change of -55°C~ 90°C(dB) | 0.9 | 1.1 | 1.2 | 1.8 |

When the center diameter of the quartz cladding layer 2 is 60 $\mu$m, four types of optical fibers are implemented. The specific parameters are shown in Table 2.

Table 2 Quartz Cladding Layer with Center Diameter of 60$\mu$m

| | Optical Fiber 5 | Optical Fiber 6 | Optical Fiber 7 | Optical Fiber 8 |
|---|---|---|---|---|
| Diameter of Quartz Cladding Layer 2 ($\mu$m) | 59 | 60 | 60.1 | 61 |
| Diameter of Core Layer 1 ($\mu$m) | 3.5 | 6.2 | 7.2 | 8.5 |
| Diameter of Inner Coating Layer 5 ($\mu$m) | 72 | 76.2 | 80.3 | 85 |
| Diameter of Outer Coating Layer 6 ($\mu$m) | 98 | 100.2 | 102.3 | 105 |
| $\Delta n_{100}$ | 0.60% | 1.00% | 1.20% | 1.40% |
| $a_{101}$ | 3 | 5 | 7 | 10 |
| Thickness of Gradient Germanium-Doped Layer 101 ($\mu$m) | 0.3 | 0.4 | 0.41 | 0.42 |
| $\Delta n_{112}$ | -0.10% | -0.20% | -0.35% | -0.50% |
| $a_{111}$ | 10 | 15 | 22 | 30 |
| Thickness of First Gradient Fluorine-Doped Layer 111 ($\mu$m) | 0.3 | 0.33 | 0.42 | 0.45 |
| Boron Content in Stress Zone 3 (ppm) | 60 | 800 | 1000 | 1200 |
| $a_4$ | 2 | 10 | 30 | 40 |
| Thickness of Transition Annular Region 4 ($\mu$m) | 3 | 4 | 5 | 6 |
| Young's Modulus of Inner Coating Layer 5 (Mpa) | 0.5 | 0.8 | 1.2 | 2.5 |
| Young's Modulus of Outer Coating Layer 6 (Gpa) | 550 | 690 | 780 | 1150 |

6

(continued)

|  | Optical Fiber 5 | Optical Fiber 6 | Optical Fiber 7 | Optical Fiber 8 |
|---|---|---|---|---|
| Working Wavelength (nm) | 850 | 1310 | 1310 | 1550 |
| Attenuation (dB/km) | 1.89 | 0.42 | 0.38 | 0.31 |
| Extinction Ratio (dB/km) | 22 | 29 | 30 | 29 |
| Attenuation Change Per Kilometer at Full Temperature Change of -55°C~90°C (dB) | 0.08 | 0.08 | 0.08 | 0.09 |
| Extinction Ratio Change Per Kilometer at Full Temperature Change of -55°C~ 90°C(dB) | 1.3 | 1.5 | 2.3 | 2.2 |

When the center diameter of the quartz cladding layer 2 is 80 $\mu$m, four types of optical fibers are implemented. The specific parameters are shown in Table 3.

Table 3 Quartz Cladding Layer with Center Diameter of 80$\mu$m

|  | Optical Fiber 9 | Optical Fiber 10 | Optical Fiber 11 | Optical Fiber 12 |
|---|---|---|---|---|
| Diameter of Quartz Cladding Layer 2 ($\mu$m) | 79 | 80.2 | 80.1 | 81 |
| Diameter of Core Layer 1 ($\mu$m) | 5.5 | 6.2 | 5.5 | 6.5 |
| Diameter of Inner Coating Layer 5 ($\mu$m) | 100 | 115 | 115 | 135 |
| Diameter of Outer Coating Layer 6 ($\mu$m) | 134 | 140 | 164 | 170 |
| $\Delta n_{100}$ | 0.60% | 1.40% | 0.60% | 1.40% |
| $a_{101}$ | 3 | 10 | 3 | 10 |
| Thickness of Gradient Germanium-Doped Layer 101 ($\mu$m) | 0.3 | 1.2 | 0.3 | 1.2 |
| $\Delta n_{112}$ | -0.10% | -0.50% | -0.10% | -0.50% |
| $a_{111}$ | 10 | 30 | 10 | 30 |
| Thickness of First Gradient Fluorine-Doped Layer 111 ($\mu$m) | 0.5 | 1 | 0.5 | 1 |
| Boron Content in Stress Zone 3 (ppm) | 60 | 1200 | 60 | 1200 |
| a4 | 2 | 40 | 2 | 40 |
| Thickness of Transition Annular Region 4 ($\mu$m) | 10 | 6 | 10 | 5 |
| Young's Modulus of Inner Coating Layer 5 (Mpa) | 0.5 | 2.5 | 0.5 | 2.5 |
| Young's Modulus of Outer Coating Layer 6 (Gpa) | 550 | 1150 | 550 | 1150 |
| Working Wavelength (nm) | 1310 | 1550 | 1310 | 1550 |
| Attenuation (dB/km) | 0.33 | 0.29 | 0.36 | 0.28 |
| Extinction Ratio (dB/km) | 29 | 26 | 31 | 29 |
| Attenuation Change Per Kilometer at Full Temperature Change of -55°C~90°C (dB) | 0.06 | 0.05 | 0.08 | 0.07 |
| Extinction Ratio Change Per Kilometer at Full Temperature Change of -55°C~90°C (dB) | 1.2 | 2.1 | 1.3 | 2.5 |

When the center diameter of the quartz cladding layer 2 is 125 $\mu$m, four types of optical fibers are implemented. The specific parameters are shown in Table 4.

## EP 3 835 837 B1

Table 4 Quartz Cladding Layer with Center Diameter of 125$\mu$m

| | Optical Fiber 13 | Optical Fiber 14 | Optical Fiber 15 | Optical Fiber 16 |
|---|---|---|---|---|
| Diameter of Quartz Cladding Layer 2 ($\mu$m) | 124 | 124.9 | 125.1 | 126 |
| Diameter of Core Layer 1 ($\mu$m) | 6 | 6.5 | 8.5 | 10 |
| Diameter of Inner Coating Layer 5 ($\mu$m) | 170 | 185.5 | 195.5 | 205 |
| Diameter of Outer Coating Layer 6 ($\mu$m) | 235 | 244.2 | 246.1 | 250 |
| $\Delta n_{100}$ | 0.60% | 1.00% | 1.20% | 1.40% |
| $a_{101}$ | 3 | 5 | 7 | 10 |
| Thickness of Gradient Germanium-Doped Layer 101 ($\mu$m) | 1 | 1.2 | 1.4 | 2 |
| $\Delta n_{112}$ | -0.10% | -0.20% | -0.35% | -0.50% |
| $a_{111}$ | 10 | 15 | 22 | 30 |
| Thickness of First Gradient Fluorine-Doped Layer 111 ($\mu$m) | 0.5 | 0.8 | 1.5 | 2.2 |
| Boron Content in Stress Zone 3 (ppm) | 60 | 800 | 1000 | 1200 |
| $a_4$ | 2 | 10 | 30 | 40 |
| Thickness of Transition Annular Region 4 ($\mu$m) | 12 | 8 | 10 | 5 |
| Young's Modulus of Inner Coating Layer 5 (Mpa) | 0.5 | 0.8 | 1.2 | 2.5 |
| Young's Modulus of Outer Coating Layer 6 (Gpa) | 550 | 690 | 780 | 1150 |
| Working Wavelength (nm) | 1310 | 1550 | 1310 | 1550 |
| Attenuation (dB/km) | 0.43 | 0.32 | 0.35 | 0.28 |
| Extinction Ratio (dB/km) | 28 | 27 | 30 | 28 |
| Attenuation Change Per Kilometer at Full Temperature Change of -55°C~90°C (dB) | 0.05 | 0.06 | 0.03 | 0.02 |
| Extinction Ratio Change Per Kilometer at Full Temperature Change of -55°C~90°C (dB) | 2.3 | 2.2 | 2.8 | 2.9 |

## Claims

1. A panda polarization maintaining optical fiber, comprising: a core layer (1) and a quartz cladding layer (2) successively arranged from the inside to the outside;

two stress zones (3), which are centrosymmetric along the core layer (1), are provided in the quartz cladding layer (2); and transition annular regions (4), which are concentric with the stress zones (3), are arranged outside the stress zones (3);
the core layer (1) comprises a germanium-doped core layer (10) and a fluorine-doped core layer (11) successively arranged from the inside to the outside; the germanium-doped core layer (10) comprises a flat germanium-doped layer (100) and a gradient germanium-doped layer (101) successively arranged from the inside to the outside, the refractive index profile of the gradient germanium-doped layer (101) is in a parabolic shape, and the refractive index of the gradient germanium-doped layer (101) gradually decreases in a direction away from the flat germanium-doped layer (100); the fluorine-doped core layer (11) comprises a quartz core layer (110), a first gradient fluorine-doped layer (111), a flat fluorine-doped layer (112) and a second gradient fluorine-doped layer (113) successively arranged from the inside to the outside, the refractive index profiles of the first gradient fluorine-doped layer (111) and the second gradient fluorine-doped layer (113) are both in the shape of a curve, and are symmetric to each other along the refractive index profile of the flat fluorine-doped layer (112), and the refractive index of the first gradient fluorine-doped layer (111) gradually decreases in a direction away from the quartz core layer (110); wherein

a working wavelength of the panda polarization maintaining optical fiber is one of 850nm, 1310nm, or 1550nm and the cut-off wavelength of the panda polarization maintaining optical fiber is less than 830nm.

2. The panda polarization maintaining optical fiber according to claim 1, wherein the refractive index of the quartz cladding layer is $n_2$, the refractive index of the flat germanium-doped layer is $n_{100}$, and the relative refractive index difference $\Delta n_{100}$ between $n_{100}$ and $n_2$ ranges from 0.6% to 1.4%.

3. The panda polarization maintaining optical fiber according to claim 1 or 2, wherein the refractive index of the quartz cladding layer is $n_2$, the refractive index of the flat germanium-doped layer is $n_{100}$, the refractive index of the gradient germanium-doped layer is $n_{101}$, the relative refractive index difference $\Delta n_{101}$ between $n_{101}$ and $n_2$ is calculated by $\Delta n_{101}=\Delta n_{100}\times(1-a_{101}x^2_{101})$, wherein $\Delta n_{100}$ is the relative refractive index difference between $n_{100}$ and $n_2$, $x_{101}$ is the distance from any point in the gradient germanium-doped layer to the flat germanium-doped layer, $a_{101}$ is a gradient coefficient of the gradient germanium-doped layer, and $3\leq a_{101}\leq 10$.

4. The panda polarization maintaining optical fiber according to any one of claims 1 to 3, wherein the refractive index of the flat fluorine-doped layer is $n_{112}$, the refractive index of the quartz cladding layer is $n_2$, and the relative refractive index difference $\Delta n_{112}$ between $n_{112}$ and $n_2$ ranges from -0.1% to -0.5%.

5. The panda polarization maintaining optical fiber according to any one of claims 1 to 4, wherein the refractive index of the flat fluorine-doped layer is $n_{112}$, the refractive index of the quartz cladding layer is $n_2$, the refractive index of the first gradient fluorine-doped layer is $n_{111}$, and the relative refractive index difference $\Delta n_{111}$ between $n_{111}$ and nz is calculated by $\Delta n_{111}=\Delta n_{112}\times(1-a_{111}x^3_{111})$, wherein $\Delta n_{112}$ is the relative refractive index difference between $n_{112}$ and $n_2$, $x_{111}$ is the distance from any point in the first gradient fluorine-doped layer to the inner edge of the flat fluorine-doped layer, $a_{111}$ is a gradient coefficient of the first gradient fluorine-doped layer, and $10\leq a_{111}\leq 30$.

6. The panda polarization maintaining optical fiber according to any one of claims 1 to 5, wherein a boron content in the stress zone is 60 ppm - 1200 ppm.

7. The panda polarization maintaining optical fiber according to any one of claims 1 to 6, wherein a boron content Y in the transition annular region is calculated by $Y=a4\,(x4+x4^2)$, wherein x4 is the distance from any point in the transition annular region to the outer edge of the transition annular region, $a_4$ is a gradient coefficient of the transition annular region, and $2\leq a_4\leq 40$.

8. The panda polarization maintaining optical fiber according to any one of claim 1 to 7, wherein an inner coating layer (5) and an outer coating layer (6) are successively arranged outside the quartz cladding layer (2) from the inside to the outside, and Young's modulus of the inner coating layer (5) is smaller than that of the outer coating layer (6).

9. The panda polarization maintaining optical fiber according to claim 8, wherein the Young's modulus of the inner coating layer is 0.5Mpa~2.5Mpa, and the Young's modulus of the outer coating layer is 550Gpa~1550Gpa.

10. The panda polarization maintaining optical fiber according to claim 8, wherein

the diameter of the quartz cladding layer is $d_1$, and the diameters of the inner coating layer and the outer coating layer are $d_2$ and $d_3$, respectively;
when $39.0\mu m\leq d_1\leq 41.0\mu m$, $52.0\mu m\leq d_2\leq 65.0\mu m$ and $78.0\mu m\leq d_3\leq 83.0\mu m$;
when $59.0\mu m\leq d_1\leq 61.0\mu m$, $72.0\mu m\leq d_2\leq 85.0\mu m$ and $98.0\mu m\leq d_3\leq 105.0\mu m$;
when $79.0\mu m\leq d_1\leq 81.0\mu m$, $100.0\mu m\leq d_2\leq 115.0\mu m$ and $134.0\mu m\leq d_3\leq 140.0\mu m$, or $115.0\mu m\leq d_2\leq 135.0\mu m$ and $164.0\mu m\leq d_3\leq 170.0\mu m$;
when $124.0\mu m\leq d_1\leq 126.0\mu m$, $170.0\mu m\leq d_2\leq 205.0\mu m$, and $235.0\mu m\leq d_3\leq 250.0\mu m$.

11. The panda polarization maintaining optical fiber according to claim 1, wherein a working wavelength of the panda polarization maintaining optical fiber is 850nm, an attenuation of the panda polarization maintaining optical fiber is less than 2.2dB/km, and an extinction ratio is higher than 20dB/km, and
at a temperature of $-55°C\sim 90°C$, a full temperature attenuation change per kilometer of the panda polarization maintaining optical fiber is less than 0.2dB, and a full temperature extinction ratio change is less than 3dB.

12. The panda polarization maintaining optical fiber according to claim 1, wherein a working wavelength of the panda polarization maintaining optical fiber is 1310nm, an attenuation of the panda polarization maintaining optical fiber is less than 0.4dB/km, and an extinction ratio is higher than 28dB/km, and
at a temperature of -55°C~90°C, a full temperature attenuation change per kilometer of the panda polarization maintaining optical fiber is less than 0.2dB, and a full temperature extinction ratio change is less than 3dB.

13. The panda polarization maintaining optical fiber according to claim 1, wherein a working wavelength of the panda polarization maintaining optical fiber is 1550nm, an attenuation of the panda polarization maintaining optical fiber is less than 0.3dB/km, and an extinction ratio is higher than 25dB/km, and
at a temperature of -55°C~90°C, a full temperature attenuation change per kilometer of the panda polarization maintaining optical fiber is less than 0.2dB, and a full temperature extinction ratio change is less than 3dB.

**Patentansprüche**

1. Polarisationserhaltende Panda-Glasfaser, umfassend:

    eine Kernschicht (1) und eine Quarzmantelschicht (2), die nacheinander von innen nach außen angeordnet sind; zwei Spannungszonen (3), die entlang der Kernschicht (1) zentralsymmetrisch sind, sind in der Quarzmantelschicht (2) vorgesehen; und ringförmige Übergangsregionen (4), die zu den Spannungszonen (3) konzentrisch sind, sind außerhalb der Spannungszonen (3) angeordnet;
    die Kernschicht (1) umfasst eine Germanium-dotierte Kernschicht (10) und eine Fluor-dotierte Kernschicht (11), die nacheinander von innen nach außen angeordnet sind; die Germanium-dotierte Kernschicht (10) umfasst eine Germanium-dotierte Konstantschicht (100) und eine Germanium-dotierte Gradientenschicht (101), die nacheinander von innen nach außen angeordnet sind, wobei das Brechungsindexprofil der Germanium-dotierten Gradientenschicht (101) einer parabolischen Gestalt folgt, und wobei der Brechungsindex der Germanium-dotierten Gradientenschicht (101) in einer Richtung weg von der Germanium-dotierten Konstantschicht (100) graduell abnimmt; wobei die Fluor-dotierte Kernschicht (11) eine Quarzkernschicht (110), eine erste Fluor-dotierte Gradientenschicht (111), eine Fluor-dotierte Konstantschicht (112) und eine zweite Fluor-dotierte Gradientenschicht (113), die nacheinander von innen nach außen angeordnet sind, umfasst, wobei die Brechungsindexprofile der ersten Fluor-dotierten Gradientenschicht (111) und der zweiten Fluor-dotierten Gradientenschicht (113) beide in der Form einer Kurve vorliegen und entlang des Brechungsindexprofils der Fluor-dotierten Konstantschicht (112) symmetrisch zueinander sind, und wobei der Brechungsindex der ersten Fluor-dotierten Gradientenschicht (111) in einer Richtung weg von der Quarzkernschicht (110) graduell abnimmt;
    wobei eine Arbeitswellenlänge der polarisationserhaltenden Panda-Glasfaser 850 nm oder 1310 nm oder 1550 nm ist und die Grenzwellenlänge der polarisationserhaltenden Panda-Glasfaser weniger als 830 nm ist.

2. Polarisationserhaltende Panda-Glasfaser nach Anspruch 1, wobei der Brechungsindex der Quarzmantelschicht $n_2$ ist, der Brechungsindex der Germanium-dotierten Konstantschicht $n_{100}$ ist, und die relative Brechungsindexdifferenz $\Delta n_{100}$ zwischen $n_{100}$ und $n_2$ von 0,6 % bis zu 1,4 % reicht.

3. Polarisationserhaltende Panda-Glasfaser nach Anspruch 1 oder 2, wobei der Brechungsindex der Quarzmantelschicht $n_2$ ist, der Brechungsindex der Germanium-dotierten Konstantschicht $n_{100}$ ist, der Brechungsindex der Germanium-dotierten Gradientenschicht $n_{101}$ ist, die relative Brechungsindexdifferenz $\Delta n_{101}$ zwischen $n_{101}$ und $n_2$ mittels $\Delta n_{101}=\Delta n_{100}\times (I-a_{101}x^2_{101})$ berechnet wird, wobei $\Delta n_{100}$ die relative Brechungsindexdifferenz zwischen $n_{100}$ und $n_2$ ist, $x_{101}$ die Distanz von irgendeinem Punkt in der Germanium-dotierten Gradientenschicht zu der Germanium-dotierten Konstantschicht ist, $a_{101}$ ein Gradientenkoeffizient der Germanium-dotierten Gradientenschicht ist, und $3\leq a_{101}\leq 10$.

4. Polarisationserhaltende Panda-Glasfaser nach einem der Ansprüche 1 bis 3, wobei der Brechungsindex der Germanium-dotierten Konstantschicht $n_{112}$ ist, der Brechungsindex der Quarzmantelschicht $n_2$ ist, und die relative Brechungsindexdifferenz $\Delta n_{112}$ zwischen $n_{112}$ und $n_2$ von -0,1 % bis zu -0,5 % reicht.

5. Polarisationserhaltende Panda-Glasfaser nach einem der Ansprüche 1 bis 4, wobei der Brechungsindex der Fluor-dotierten Konstantschicht $n_{112}$ ist, der Brechungsindex der Quarzmantelschicht $n_2$ ist, der Brechungsindex der ersten Fluor-dotierten Gradientenschicht $n_{111}$ ist, und die relative Brechungsindexdifferenz $\Delta n_{111}$ zwischen $n_{111}$ und $n_2$ mittels $\Delta n_{111}=\Delta n_{112}\times (I-a_{111}x^3_{111})$ berechnet wird, wobei $\Delta n_{112}$ die relative Brechungsindexdifferenz zwischen $n_{112}$ und $n_2$ ist, $x_{111}$ die Distanz von irgendeinem Punkt in der ersten Fluor-dotierten Gradientenschicht zu dem Innenrand der Fluor-dotierten Konstantschicht ist, $a_{111}$ ein Gradientenkoeffizient der ersten Fluor-dotierten Gradientenschicht ist, und $10 \leq a_{111} \leq 30$.

6. Polarisationserhaltende Panda-Glasfaser nach einem der Ansprüche 1 bis 5, wobei ein Borgehalt in der Spannungszone 60 ppm - 1200 ppm ist.

7. Polarisationserhaltende Panda-Glasfaser nach einem der Ansprüche 1 bis 6, wobei ein Borgehalt Y in der ringför-migen Übergangsregion durch $Y = a_4(x_4 + x_4^2)$ berechnet wird, wobei $x_4$ die Distanz zwischen irgendeinem Punkt in der ringförmigen Übergangsregion zu dem Außenrand der ringförmigen Übergangsregion ist, $a_4$ ein Gradientenko-effizient der ringförmigen Übergangsregion ist, und $2 \leq a_4 < 40$.

8. Polarisationserhaltende Panda-Glasfaser nach einem der Ansprüche 1 bis 7, wobei eine innere Beschichtungsschicht (5) und eine äußere Beschichtungsschicht (6) nacheinander von innen nach außen außerhalb der Quarzmantelschicht (2) angeordnet sind, und das Elastizitätsmodul der inneren Beschichtungsschicht (5) kleiner als das der äußeren Beschichtungsschicht (6) ist.

9. Polarisationserhaltende Panda-Glasfaser nach Anspruch 8, wobei das Elastizitätsmodul der inneren Beschichtungsschicht 0,5 MPa-2,5 MPa beträgt, und das Elastizitätsmodul der äußeren Beschichtungsschicht 550 GPa-1550 GPa beträgt.

10. Polarisationserhaltende Panda-Glasfaser nach Anspruch 8, wobei der Durchmesser der Quarzmantelschicht $d_1$ ist und die Durchmesser der inneren Beschichtungsschicht und der äußeren Beschichtungsschicht jeweils $d_2$ und $d_3$ sind;

   wenn 39,0 $\mu$m $\leq d_1 \leq$ 41,0 um, 52,0 $\mu$m $\leq d_2 \leq$ 65,0 $\mu$m und 78,0 $\mu$m $\leq d_3 \leq$ 83,0 um;
   wenn 59,0 $\mu$m $\leq d_1 \leq$ 61,0 $\mu$m, 72,0 $\mu$m $\leq d_2 \leq$ 85,0 $\mu$m und 98,0 $\mu$m $\leq d_3 \leq$ 105,0 $\mu$m;
   wenn 79,0 $\mu$m $\leq d_1 \leq$ 81,0 $\mu$m, 100,0 $\mu$m $\leq d_2 \leq$ 115,0 $\mu$m und 134,0 $\mu$m $\leq d_3 \leq$ 140,0 $\mu$m, oder 115,0 $\mu$m $\leq d_2 \leq$ 135,0 $\mu$m und 164,0 $\mu$m $\leq d_3 \leq$ 170,0 $\mu$m;
   wenn 124,0 $\mu$m $\leq d_1 \leq$ 126,0 $\mu$m, 170,0 $\mu$m $\leq d_2 \leq$ 205,0 $\mu$m und 235,0 $\mu$m $\leq d_3 \leq$ 250 $\mu$m.

11. Polarisationserhaltende Panda-Glasfaser nach Anspruch 1, wobei eine Arbeitswellenlänge der polarisationserhaltenden Panda-Glasfaser 850 nm ist, eine Dämpfung der polarisationserhaltenden Panda-Glasfaser kleiner als 2,2 dB/km ist, und ein Auslöschungsverhältnis höher als 20 dB/km ist, und
bei einer Temperatur von -55°C - 90°C eine volle Temperaturdämpfungsänderung pro Kilometer der polarisationserhaltenden Panda-Glasfaser kleiner als 0,2 dB ist, und ein volles Temperaturauslöschungsverhältnis kleiner als 3dB ist.

12. Polarisationserhaltende Panda-Glasfaser nach Anspruch 1, wobei eine Arbeitswellenlänge der polarisationserhaltenden Panda-Glasfaser 1310 nm ist, eine Dämpfung der polarisationserhaltenden Panda-Glasfaser kleiner als 0,4 dB/km ist, und ein Auslöschungsverhältnis höher als 28 dB/km ist, und
bei einer Temperatur von -55°C - 90°C eine volle Temperaturdämpfungsänderung pro Kilometer der polarisationserhaltenden Panda-Glasfaser kleiner als 0,2 dB ist, und ein volles Temperaturauslöschungsverhältnis kleiner als 3dB ist.

13. Polarisationserhaltende Panda-Glasfaser nach Anspruch 1, wobei eine Arbeitswellenlänge der polarisationserhaltenden Panda-Glasfaser 1550 nm ist, eine Dämpfung der polarisationserhaltenden Panda-Glasfaser kleiner als 0,3 dB/km ist, und ein Auslöschungsverhältnis höher als 25 dB/km ist, und
bei einer Temperatur von -55°C - 90°C eine volle Temperaturdämpfungsänderung pro Kilometer der polarisationserhaltenden Panda-Glasfaser kleiner als 0,2 dB ist, und ein volles Temperaturlöschverhältnis kleiner als 3dB ist.

**Revendications**

1. Fibre optique à maintien de polarisation Panda, comprenant :

   une couche d'âme (1) et une couche de gaine en quartz (2) disposées successivement de l'intérieur vers l'extérieur ;
   deux zones de contrainte (3), qui sont centrosymétriques le long de la couche d'âme (1), sont disposées dans la couche de gaine en quartz (2) ; et des régions annulaires de transition (4), qui sont concentriques avec les zones de contrainte (3), sont disposées à l'extérieur des zones de contrainte (3) ;

la couche d'âme (1) comprend une couche d'âme dopée au germanium (10) et une couche d'âme dopée au fluor (11) disposées successivement de l'intérieur vers l'extérieur ; la couche d'âme dopée au germanium (10) comprend une couche dopée au germanium plate (100) et une couche dopée au germanium à gradient (101) disposées successivement de l'intérieur vers l'extérieur, le profil d'indice de réfraction de la couche dopée au germanium à gradient (101) prend une forme parabolique, et l'indice de réfraction de la couche dopée au germanium à gradient (101) diminue progressivement dans une direction s'éloignant de la couche dopée au germanium plate (100) ; la couche d'âme dopée au fluor (11) comprend une couche d'âme en quartz (110), une première couche dopée au fluor à gradient (111), une couche dopée au fluor plate (112) et une deuxième couche dopée au fluor à gradient (113) disposées successivement de l'intérieur vers l'extérieur, les profils d'indice de réfraction de la première couche dopée au fluor à gradient (111) et de la deuxième couche dopée au fluor à gradient (113) prennent tous deux la forme d'une courbe, et sont symétriques l'un de l'autre le long du profil d'indice de réfraction de la couche dopée au fluor plate (112), et l'indice de réfraction de la première couche dopée au fluor à gradient (111) diminue progressivement dans une direction s'éloignant de la couche d'âme en quartz (110) ; dans laquelle

une longueur d'onde de travail de la fibre optique à maintien de polarisation Panda est soit 850 nm, soit 1310 nm, soit 1550 nm, et la longueur d'onde de coupure de la fibre optique à maintien de polarisation Panda est inférieure à 830 nm.

2. Fibre optique à maintien de polarisation Panda selon la revendication 1, dans laquelle l'indice de réfraction de la couche de gaine en quartz est $n_2$, l'indice de réfraction de la couche dopée au germanium plate est $n_{100}$, et la différence relative d'indice de réfraction $\Delta n_{100}$ entre $n_{100}$ et $n_2$ va de 0,6 % à 1,4 %.

3. Fibre optique à maintien de polarisation Panda selon la revendication 1 ou 2, dans laquelle l'indice de réfraction de la couche de gaine en quartz est $n_2$, l'indice de réfraction de la couche dopée au germanium plate est $n_{100}$, l'indice de réfraction de la couche dopée au germanium à gradient est $n_{101}$, la différence relative d'indice de réfraction $\Delta n_{101}$ entre $n_{101}$ et $n_2$ est calculée par $\Delta n_{101} = \Delta n_{100} \times (1-a_{101}x^2_{101})$, dans laquelle $\Delta n_{100}$ est la différence relative d'indice de réfraction entre $n_{100}$ et $n_2$, $x_{101}$ est la distance depuis n'importe quel point dans la couche dopée au germanium à gradient jusqu'à la couche dopée au germanium plate, $a_{101}$ est un coefficient de gradient de la couche dopée au germanium à gradient, et $3 \leq a_{101} \leq 10$.

4. Fibre optique à maintien de polarisation Panda selon l'une quelconque des revendications 1 à 3, dans laquelle l'indice de réfraction de la couche dopée au fluor plate est $n_{112}$, l'indice de réfraction de la couche de gaine en quartz est $n_2$, et la différence relative d'indice de réfraction $\Delta n_{112}$ entre $n_{112}$ et $n_2$ va de -0,1 % à -0,5 %.

5. Fibre optique à maintien de polarisation Panda selon l'une quelconque des revendications 1 à 4, dans laquelle l'indice de réfraction de la couche dopée au fluor plate est $n_{112}$, l'indice de réfraction de la couche de gaine en quartz est $n_2$, l'indice de réfraction de la première couche dopée au fluor à gradient est $n_{111}$, et la différence relative d'indice de réfraction D$n_{111}$ entre $n_{111}$ et $n_2$ est calculée par $\Delta n_{111} = \Delta n_{112} \times (1-a_{111}x^3_{111})$, dans laquelle $\Delta n_{112}$ est la différence relative d'indice de réfraction entre $n_{112}$ et $n_2$, $x_{111}$ est la distance depuis n'importe quel point dans la première couche dopée au fluor à gradient jusqu'au bord interne de la couche dopée au fluor plate, $a_{111}$ est un coefficient de gradient de la première couche dopée au fluor à gradient, et $10 \leq a_{111} \leq 30$.

6. Fibre optique à maintien de polarisation Panda selon l'une quelconque des revendications 1 à 5, dans laquelle une teneur en bore dans la zone de contrainte est de 60 ppm - 1200 ppm.

7. Fibre optique à maintien de polarisation Panda selon l'une quelconque des revendications 1 à 6, dans laquelle une teneur en bore Y dans la région annulaire de transition est calculée par $Y = a_4(x4+x4^2)$, dans laquelle x4 est la distance depuis n'importe quel point dans la région annulaire de transition jusqu'au bord externe de la région annulaire de transition, $a_4$ est un coefficient de gradient de la région annulaire de transition, et $2 \leq a_4 \leq 40$.

8. Fibre optique à maintien de polarisation Panda selon l'une quelconque des revendications 1 à 7, dans laquelle une couche de revêtement interne (5) et une couche de revêtement externe (6) sont successivement disposées à l'extérieur de la couche de gaine en quartz (2) de l'intérieur vers l'extérieur, et le module de Young de la couche de revêtement interne (5) est inférieur à celui de la couche de revêtement externe (6).

9. Fibre optique à maintien de polarisation Panda selon la revendication 8, dans laquelle le module de Young de la couche de revêtement interne est de 0,5 MPa~2,5 MPa, et le module de Young de la couche de revêtement externe est de 550 GPa~1550 GPa.

10. Fibre optique à maintien de polarisation Panda selon la revendication 8, dans laquelle

le diamètre de la couche de gaine en quartz est $d_1$, et les diamètres de la couche de revêtement interne et de la couche de revêtement externe sont respectivement $d_2$ et $d_3$ ;
quand 39,0 $\mu$m ≤ $d_1$ ≤ 41,0 $\mu$m, 52,0 $\mu$m ≤ $d_2$ ≤ 65,0 $\mu$m et 78,0 um ≤ $d_3$ ≤ 83,0 $\mu$m ;
quand 59,0 $\mu$m ≤ $d_1$ ≤ 61,0 $\mu$m, 72,0 $\mu$m ≤ $d_2$ ≤ 85,0 $\mu$m et 98,0 $\mu$m ≤ $d_3$ ≤ 105,0 $\mu$m ;
quand 79,0 $\mu$m ≤ $d_1$ ≤ 81,0 $\mu$m, 100, 0 $\mu$m ≤ $d_2$ ≤ 115,0 $\mu$m et 134,0 $\mu$m ≤ $d_3$ ≤ 140,0 $\mu$m, ou 115,0 $\mu$m ≤ $d_2$ ≤ 135,0 $\mu$m et 164,0 $\mu$m ≤ $d_3$ ≤ 170,0 $\mu$m ;
quand 124,0 um ≤ $d_1$ ≤ 126,0 $\mu$m, 170,0 $\mu$m ≤ $d_2$ ≤ 205,0 $\mu$m et 235,0 $\mu$m ≤ $d_3$ ≤ 250,0 um.

11. Fibre optique à maintien de polarisation Panda selon la revendication 1, dans laquelle une longueur d'onde de travail de la fibre optique à maintien de polarisation Panda est de 850 nm, une atténuation de la fibre optique à maintien de polarisation Panda est inférieure à 2,2 dB/km, et un taux d'extinction est supérieur à 20 dB/km, et à une température de -55 °C ~ 90 °C, une variation totale en température de l'atténuation par kilomètre de la fibre optique à maintien de polarisation Panda est inférieure à 0,2 dB, et une variation totale en température du taux d'extinction est inférieure à 3 dB.

12. Fibre optique à maintien de polarisation Panda selon la revendication 1, dans laquelle une longueur d'onde de travail de la fibre optique à maintien de polarisation Panda est de 1310 nm, une atténuation de la fibre optique à maintien de polarisation Panda est inférieure à 0,4 dB/km, et un taux d'extinction est supérieur à 28 dB/km, et à une température de -55 °C - 90 °C, une variation totale en température de l'atténuation par kilomètre de la fibre optique à maintien de polarisation Panda est inférieure à 0,2 dB, et une variation totale en température du taux d'extinction est inférieure à 3 dB.

13. Fibre optique à maintien de polarisation Panda selon la revendication 1, dans laquelle une longueur d'onde de travail de la fibre optique à maintien de polarisation Panda est de 1550 nm, une atténuation de la fibre optique à maintien de polarisation Panda est inférieure à 0,3 dB/km, et un taux d'extinction est supérieur à 25 dB/km, et à une température de -55 °C - 90 °C, une variation totale en température de l'atténuation par kilomètre de la fibre optique à maintien de polarisation Panda est inférieure à 0,2 dB, et une variation totale en température du taux d'extinction est inférieure à 3 dB.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017139129 A1
- CN 105278032 A
- US 20130308914 A1
- US 20130071082 A1
- US 2002033998 A1
- CN 103018821 A